# EUROPEAN PATENT APPLICATION

(11) **EP 2 346 130 A2**
(43) Date of publication of application: **20.07.2011**
(21) Application number: 10014060.7
(22) Date of filing: 27.10.2010
(51) Int. Cl.: H02G 3/04

(54) **Fireproof tube for cables**

(30) Priority: 27.10.2009 CZ 20090707
(71) Applicant: Kabelovna Kabex a.s., 345 62 Holysov (CZ)
(72) Inventor: Kupilík, Pavel, 345 62 Holysov (CZ); Václavík, Pavel, 439 81 Kryry (CZ)
(74) Representative: Langrova, Irena

(57) **Abstract**

The fire-non-propagating protective and installation tube for cables is utilizable in telecommunications especially, for cables installation in surroundings with increased danger of being hit with fire, and for collecting and escape rooms. The tube consists of two layers at least where said layers are the inner layer (1) which is resistant to the internal overpressure and the inner surface thereof is smooth and/or profiled to secure a suitable surface for cable installation by blowing in. It is made of flexible material on the basis of plastic, complemented with fire-retarders increasing its oxygen number. The outer layer (2) is made of flexible material on the basis of plastic the oxygen number of which is 30 per cent at least and/or is made of metallic material in a flexible structure form. Between the inner layer (1) and the outer layer (2) one fireproof layer (3) can be located at least.

## Description

### Field of Engineering

The proposed solution belongs in the domain of installation of electric cables or feeders or combined optical and electric cables or feeders, between protective tubes or feeders in concrete terms respectively.

### State of the Prior Art

Hitherto, the protective and installation tubes for cables are used as made of the material and mixtures of HDPE, LDPE or PUR usually. These tubes serve to protect the cables mechanically, especially the electrical or optical cables which are installed therein by blowing-in as a rule. The tubes, used up to this time, are solved as one-layer ones and, in some cases, the one-layer tube can be provided with inner and outer micro-layer which does not change the tube properties in principle nevertheless. As a rule, the outer micro-layer has various colours, the function of which being optical or esthetical respectively therefore, in order to distinguish various tube types. The interior micro-layer secures corresponding slipperiness of the inner surface.

In some cases with surroundings, the protective and installation tubes are installed in, requiring the fire-retarding material directly, the materials with fire-retarder stuffs are utilized, e.g. those on the basis of magnesium or aluminium hydroxides. However, the requested fire-retarding effect cannot be achieved usually because of very high claims of standards, i.e. due to functional requirements of the resistance to internal overpressure in a tube especially during the blowing-in of a cable. In addition, in installing tubes in a bundle, the tube wall is often burned through with resulting inside burning. The number of admixtures, securing the fire retardation, is up to the volume of admixtures of 60 per cent of the total tube mixture volume. Usually, great quantity of admixtures makes worth the pressure-resistance of the tube.

The above mentioned disadvantages are solved by means of the proposed technical solution which enables to make protective and installation tube with satisfying fire-resistivity with preserving the physical tube properties as the flexibility and pressure-resistivity.

### Disclosure of the Invention

The substance of the proposed technical solution is to build a protective and installation tube consisting of more individual layers in the combination which ensures requested properties thereof. In the fundamental solution the tube wall is made of inner and outer layers. The inner layer ensures the corresponding tube properties with cable blowing-in - from suitable tube inner surface to sufficient rigidity against overpressure inside the tube. In dependence on the used solution, the inner surface of the inner layer is smooth and/or profiled on the contrary. Especially, the profiled surface is provided with longitudinal grooves or possibly with great number of spot logs. In both these solutions the profile surface reduces the contact area between the surface and the blown-in cable. The inner layer is made of plastic-based material complemented with fire-retarders which increase its oxygen number. The inner layer is about 3 mm thick as a rule.

The outer tube wall is made of non-inflammable or very heavily combustible material. In practice, this material can be plastic-based, complemented with fire-retarders which increase its oxygen number. Here, the oxygen number is 30 per cent at least. The oxygen number, higher than 50 per cent, appears to be advantageous. In case the outer layer is made of the plastic-based material, its thickness is about 2 mm. In another case, the outer layer can be made of metal material in a form of a flexible structure. In practice, the metal material, in form of a flexible structure, is a transversally profiled metal tube as a rule, the so called gooseneck or bellows. The metal tube wall shaping enables to form the tube in bends.

As a variant, at least one fireproof layer can be located between the inner and outer tube layers. This solution can be used in case the outer layer consists of the plastic-based material especially. In case of fire, the fireproof layer prevents effectively the tube itself from being burned through. This effect is achieved by that the fireproof layer, located between the inner and outer layers of plastic-based materials, consists of a layer of non-inflammable material. In practice the fireproof layer consists e.g. of wrapping-round of glass-textile material, glass-mica ribbon, metal foil, glass fibres or of Kevlar fibres and/or is made of ceramic non-backed stuff in powder condition. If a tube with an outer layer, composed of the material on the basis of plastic, is hit with fire, a hardened burned crust is formed due to outer layer burning in the first phase, said crust adhering on the fireproof layer. With the fireproof layer consisting of proper material, this layer protects effectively the direct fire from penetrating into the tube.

In case the outer layer consists of transversally profiled metal tube, the metal itself is sufficiently resistant against burning through. The fireproof layer need not be used as a rule.

The tube, made in this way, keeps its flexibility with steady oval shape in bending. Thanks to its fireproof structure even the unprotected cable, installed inside the tube, is protected.

### Examples on realization

### Example no. 1

A fire-non-propagating protective and installation tube for cables is made as three-layer one. It consists of the inner layer 1 and the outer layer 2 between which the fireproof layer 3 is located. The outer diameter of the laminated structure is 45 mm with the inner diameter being 34 mm.

The inner layer 1 is made of material of the mixture of plasticizing material complemented with fire-retarders on the basis of magnesium and aluminium hydroxides which increase the oxygen number thereof. In this case the oxygen number of the inner layer 1 is 40 per cent and its thickness equals 3.5 mm.

The outer layer 2 of the wall is made of material on the basis of plasticizing material mixture on the basis of HDPE complemented with additives with fire-retarders on the basis of the aluminium hydroxide, said retarders increasing the oxygen number thereof. In this case the oxygen number of the outer layer 2 equals 50 per cent and thickness of said layer is 2 mm. Between the inner layer 1 and the outer layer 2 of the tube one fireproof layer 3 is located. In this case the fireproof layer 3 is made of a wrapping-over of glass-textile material.

In this case, in the outer layer 2 or in the interface between the outer layer 2 and the fireproof layer 3 respectively the unweaving thread 5 is placed which is oriented in parallel with respect to the tube longitudinal axis. The unweaving thread 5 serves to tear or remove the outer layer 2 respectively during the tube assembling and in providing it with end couplings.

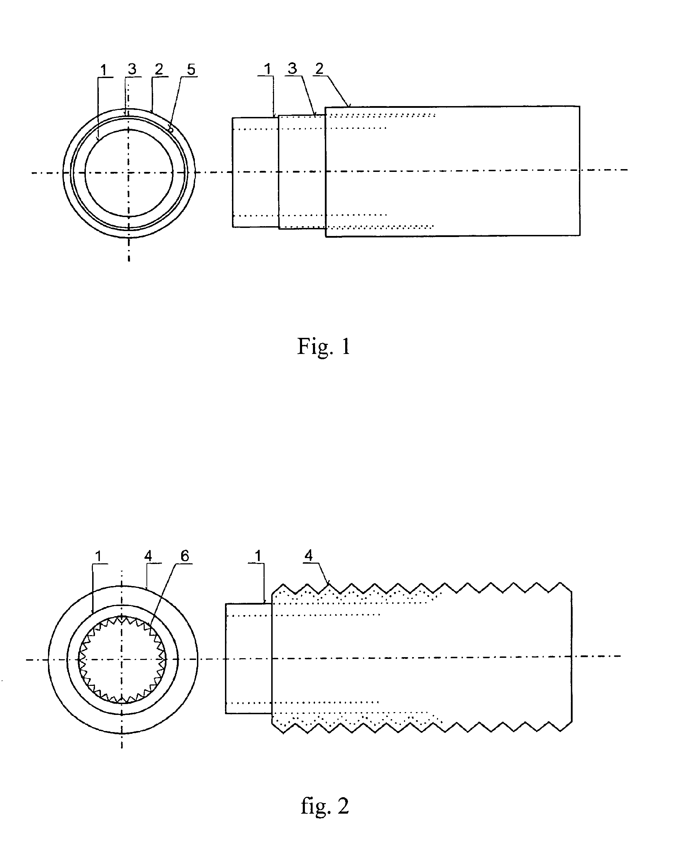

If the tube, made in this way, is hit with fire, a hardened burned crust is formed because of outer layer burning in the first phase, said crust adhering on the fireproof layer. Due to that the fireproof layer 3 consists of glass-textile material, this layer prevents the direct fire from penetrating inside the tube effectively. The exemplary embodiment is obvious on Fig. 1.

### Example no. 2

A fire-non-propagating protective and installation tube for cables is made as three-layer one. It consists of the inner layer 1 and the outer layer 2 between which the fireproof layer 3 is located.

The inner layer 1 is made of plastic-based material complemented with fire-retarders on the basis of magnesium hydroxide which increase its oxygen number. In this case the oxygen number of the inner layer 1 is 40 per cent and its thickness is 3.0 mm. The internal surface of the inner layer 1 is profiled. The profiled surface is provided with a great number of fine longitudinal grooves 6.

The outer layer 2 of the tube wall is made with the same specification as it is in the Example no. 1. Between the inner layer 1 and the outer layer 2 of the tube one fireproof layer 3 is located. In this case the fireproof layer 3 is made of a wrapping-over of glass threads.

If the tube, made in this way, is hit with fire, a hardened burned crust is formed due to burning of the outer layer 1 in the first phase, said crust adhering on the fireproof layer 3. Due to that the fireproof layer 3 consists of glass threads, this layer prevents effectively the direct fire from penetrating into the tube.

### Example no. 3

A fire-non-propagating protective and installation tube for cables is made as three-layer one. It consists of the inner layer 1 and the outer layer 2 between which the fireproof layer 3 is located.

The inner layer 1 is made of material on the basis of polyurethane mixture complemented with fire-retarders on the basis of magnesium and aluminium hydroxides which increase its oxygen number. In this case the oxygen number of the inner layer 1 is 45 per cent and its thickness is 2.5 mm.

The outer layer 2 of the tube wall is made of material on the basis of LDPE, complemented with fire-retarders on the basis of the aluminium hydroxide which augments the oxygen number thereof. In this case, the oxygen number of the outer layer 2 is 60 per cent and its thickness is 2 mm. Between the inner layer 1 and the outer layer 2 of the tube, one fireproof layer 3 is situated. In this case the fireproof layer 3 consists of a layer of ceramic non-backed stuff in powder condition with non-defined thickness.

With the tube, made in this way, being hit with fire, a hardened burned crust is formed due to burning of the outer layer 1 in the first phase, said crust adhering on the fireproof layer 3. Due to that the fireproof layer 3 consists of ceramic non-backed substance in powder condition, this layer prevents effectively the direct fire from penetrating inside the tube.

### Example no. 4

A fire-non-propagating protective and installation tube for cables is made as four-layer one. It consists of the inner layer 1 and the outer layer 2 between which two fireproof layers 3 are located - the bottom layer 3a and the outer layer 3b. Here the inner layer 1 and the outer layer 2 are made with the same specification as in the Example no. 3. The bottom fireproof layer 3a consists of kevlar threads which are braided around the inner layer 1. The outer fireproof layer 3b consists of a layer of ceramic non-backed stuff in powder condition which is deposited on the bottom fireproof layer 3a.

In this case, under the outer layer 2, the unweaving thread 5 is located which is oriented in parallel to the longitudinal tube axis. The unweaving thread 5 serves to tear or remove the outer layer 2 respectively during tube assembling and providing it with end couplings.

With the tube, made in this way, being hit with fire, a hardened burned crust is formed because of outer layer burning in the first phase, said crust sticking on the fireproof layers 3a, 3b. Due to using of two fireproof layers 3, in this case, i.e. the bottom layer 3a and the outer layer 3b, and to applying the combination of the Kevlar threads wrapping around and the ceramic non-backed stuff in powder condition, said layers preventing effectively the direct fire from penetrating into the tube.

### Example no. 5

A fire-non-propagating protective and installation tube for cables is made as two-layer one. It consists of the inner layer 1 and the outer layer 2.

The inner layer 1 is made of material on the basis of plastic complemented with the fire retarders on the basis of magnesium hydroxide, said fire-retarders increasing its oxygen number. The oxygen number of the inner layer 1 is 45 per cent and its thickness is 3.5 mm in this case.

The outer layer 2 of the protective and installation tube wall is made of transversally profiled aluminium tube 4. The wall shaping of this aluminium tube 4 enables to form it in bents. The aluminium, as the applied material, protects the protective and installation tube wall from burning through. Inflammation of the inner layer 1 of the protective and installation tube wall due to heat transferred through the wall of the aluminium tube 4, forming the outer layer 2, is prevented thanks to content of the fire-retarders on the basis of magnesium hydroxide.

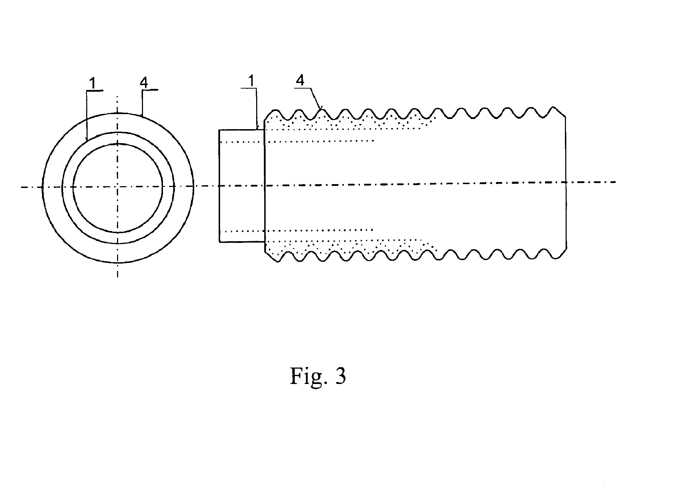

The exemplary embodiment is obvious on Fig. 3.

### Example no. 6

A fire-non-propagating protective and installation tube for cables is made as two-layer one. It consists of the inner layer 1 and the outer layer 2.

The inner layer 1 is made of plastic-based material complemented with the fire-retarders on the basis of magnesium hydroxide which increase the oxygen number thereof. In this case the oxygen number of the inner layer 1 is 45 per cent and its thickness is 3.5 mm. The inner surface of the inner layer 1 is profiled. The profiled surface is provided with a great number of fine longitudinal grooves 6.

Here the outer layer 2 of the protective and installation tube wall is made with the same specification as it is the case in the Example no. 5.

The exemplary embodiment can be seen on Fig. 2.

### List of reference numbers

- 1 -: inner layer
- 2 -: outer layer
- 3 -: fireproof layer
- 3a -: bottom fireproof layer
- 3b -: outer fireproof layer
- 4 -: metal tube
- 5 -: unweaving thread
- 6 -: longitudinal grooves

## Claims

1. A fire-non-propagating protective and installation tube for cables, utilizable in telecommunications especially, for cables installation in surroundings with increased danger of being hit with fire, and for collecting and escape rooms, **characterized in that** the tube consists of two layers at least, said layers being the inner layer (1), which is resistant to the internal overpressure with the inner surface thereof being smooth and/or profiled to ensure suitable surface to install a cable by blowing in, said inner layer (1) being made of flexible material on the basis of plastic, which is complemented with fire-retarders increasing the oxygen number thereof, and the outer layer (2) is made of flexible material on the basis of plastic, the oxygen number of said material being 30 per cent at least,
and/or said tube is made of metallic material in the form of a flexible structure.

2. The fire-non-propagating protective and installation tube for cables according to the Claim 1, **characterized in that** between the inner layer (1) and the outer layer (2) one fireproof layer (3) is located at least.

3. The fire-non-propagating protective and installation tube for cables in compliance with the Claims 1 and 2, **characterized in that** under the outer layer (2), of the material on the basis of plastic, the unweaving thread (5) is placed, which is oriented in parallel to the longitudinal axis of the tube.
